# FASCICULE DE BREVET EUROPEEN

(11) **EP 4 183 994 B1**
(45) Date de publication et mention de la délivrance du brevet: **07.08.2024**
(21) Numéro de dépôt: 22206381.0
(22) Date de dépôt: 09.11.2022
(51) Int. Cl.: F02C 7/045, G10K 11/168, G10K 11/172

(54) **PEAU POREUSE POURVUE D'UNE PLURALITÉ DE BANDES ET PANNEAU D'ATTÉNUATION ACOUSTIQUE COMPRENANT UNE TELLE PEAU POREUSE**
PORÖSE HAUT MIT MEHREREN BÄNDERN UND SCHALLDÄMMPLATTE MIT SOLCH EINER PORÖSEN HAUT
POROUS SKIN PROVIDED WITH A PLURALITY OF STRIPS AND ACOUSTIC ATTENUATION PANEL COMPRISING SUCH A POROUS SKIN

(30) Priorité: 17.11.2021 FR 2112149
(43) Date de publication de la demande: 24.05.2023
(73) Titulaire: Airbus Operations SAS, 31060 Toulouse (FR)
(72) Inventeur: CARIOU, Charles, 31060 TOULOUSE (FR)
(74) Mandataire: Gevers & Orès

(56) Documents cités:
- WO-A1-2018/020174
- WO-A1-2019/020933
- CA-A1- 2 425 364
- FR-A1- 2 735 064

## Description

### Domaine technique

La présente invention concerne une peau poreuse pour un panneau d'atténuation acoustique, ainsi qu'un panneau d'atténuation acoustique pourvu d'une telle peau poreuse.

### Etat de la technique

Dans un grand nombre de domaines, des nuisances sonores importantes sont générées, par exemple par des machines ou des équipements bruyants, et peuvent être indésirables. En particulier, on sait que sur un aéronef, par exemple un avion de transport, des bruits importants sont souvent générés, notamment par les ensembles propulsifs (ou réacteurs) de l'aéronef. Pour des raisons de confort mais également de norme, ces bruits sont une nuisance qu'il est nécessaire de réduire.

Pour ce faire, il est connu d'utiliser, par exemple au niveau de nacelles de réacteurs, des panneaux présentant une bonne absorption acoustique afin de réduire les nuisances sonores. En particulier, on connaît par les documents EP3552951 A1, EP1355294A1 et US2019309682A1 un panneau d'atténuation acoustique pour un aéronef.

De façon usuelle, un panneau d'atténuation acoustique comprend généralement une structure acoustique pourvue d'une plaque présentant de bonnes propriétés d'absorption acoustique, notamment pour les fréquences des bruits les plus gênants. Cette structure acoustique utilisée pour l'absorption acoustique peut être en matériau alvéolaire, mais également dans un matériau à base de mousse ou dans un matériau fibreux. Un tel panneau d'atténuation acoustique est, en général, également muni sur l'une de ses deux faces d'une peau poreuse (à savoir perforée) dite « résistive » et, sur l'autre face, d'une peau arrière dite « réflective » non perforée. La peau résistive permet aux ondes sonores (ou ondes acoustiques) de pénétrer dans la structure acoustique où elles sont atténuées.

Cependant, comme la peau résistive est perforée, elle peut également permettre à un écoulement, par exemple un écoulement d'un fluide comme l'air, de pénétrer dans la structure acoustique. Un tel écoulement qui entre dans la structure acoustique est susceptible de perturber l'atténuation acoustique, notamment en créant des phénomènes indésirables qui réduisent la portion effective des ouvertures de la peau résistive.

Cette solution peut être améliorée.

### Exposé de l'invention

La présente invention a pour objet de proposer une solution permettant de remédier à l'inconvénient précité. Pour ce faire, elle concerne une peau poreuse pour un panneau d'atténuation acoustique, ladite peau poreuse étant destinée à être soumise à un écoulement de fluide.

Selon l'invention, la peau poreuse comporte une pluralité de bandes qui sont agencées transversalement à l'écoulement de fluide et qui, successivement, se chevauchent latéralement, chaque bande en amont de l'écoulement de fluide chevauchant la ou les bandes en aval dudit écoulement de fluide, chacune desdites bandes comporte un premier bord latéral dit amont et un second bord latéral dit aval, au moins un desdits bords latéraux comprenant un contour formant une ligne avec déviations, et l'agencement des bandes et le ou les contours de leurs bords latéraux sont configurés pour ménager, entre les bandes, des ouvertures communicant depuis une face externe de la peau poreuse jusqu'à une face interne de ladite peau poreuse, et pour empêcher l'écoulement de fluide de pénétrer dans lesdites ouvertures.

Dans le cadre de la présente invention, une « ligne avec déviations » désigne une ligne non droite, comme précisé ci-dessous.

Ainsi, grâce à l'invention, on obtient une peau poreuse configurée pour pouvoir être traversée par des ondes sonores, tout en étant apte, lorsqu'elle est soumise à un écoulement de fluide, à empêcher cet écoulement de fluide de la traverser. Aussi, lorsqu'elle est utilisée comme peau résistive sur un panneau d'atténuation acoustique, elle est en mesure, en empêchant tout écoulement de fluide de la traverser, d'éviter l'apparition des phénomènes indésirables précités et ainsi de remédier à l'inconvénient mentionné ci-dessus.

En outre, de façon avantageuse, le chevauchement des bandes crée entre deux bandes successives, des surfaces de contact, et lesdites bandes sont fixées entre elles au niveau d'au moins certaines desdites surfaces de contact.

Dans un mode de réalisation préféré, au moins certaines desdites ouvertures sont créées par des formes adaptées d'une part du contour du bord latéral aval d'une première bande et d'autre part du contour du bord latéral amont d'une seconde bande directement en aval de ladite première bande, chacune des ouvertures ainsi créées étant recouverte par une troisième bande qui est directement en amont de ladite première bande et qui surplombe cette première bande vers l'aval.

Dans un premier mode de réalisation, le contour d'au moins l'un des bords latéraux comprend, au moins partiellement, une ligne curviligne.

En outre, en variante ou en complément, dans un second mode de réalisation, le contour d'au moins l'un des bords latéraux comprend, au moins partiellement, une ligne brisée.

Par ailleurs, dans un mode de réalisation préféré, lesdites bandes sont de forme identique. Dans un autre mode de réalisation, au moins certaines desdites bandes peuvent être de forme différente entre elles.

De plus, avantageusement, lesdites bandes présentent, à au moins l'un de leurs bords latéraux sur l'une de leurs faces, une discontinuité formant au moins une surface plane.

La présente invention concerne également un panneau d'atténuation acoustique comprenant au moins une structure acoustique pourvue d'une peau poreuse telle que celle décrite ci-dessus.

De plus, dans un mode de réalisation préféré, la structure acoustique comprend au moins une structure alvéolaire pourvue, sur l'une de ses faces, d'une peau arrière dite réflective et, sur l'autre face, de ladite peau poreuse.

### Brève description des figures

Les figures annexées feront bien comprendre comment l'invention peut être réalisée. Sur ces figures, des références identiques désignent des éléments semblables.
La figure 1 est une vue en perspective d'un mode de réalisation préféré d'une peau poreuse comportant des bandes pourvues de bords latéraux présentant un contour en forme de sinusoïde.
La figure 2 est une vue en perspective d'un mode de réalisation particulier d'une bande de la peau poreuse de la figure 1.
La figure 3 est une vue en perspective d'un mode de réalisation particulier de trois bandes selon le mode de réalisation de la figure 2, qui se chevauchent et ménagent, entre elles, des ouvertures.
La figure 4 est une vue en coupe, selon une ligne de coupe C-C de la figure 3.
La figure 5 est une vue en perspective d'un mode de réalisation particulier d'une peau poreuse comportant des bandes pourvues de bords latéraux présentant un contour formé de créneaux trapézoïdaux.
La figure 6 est une vue en perspective d'un mode de réalisation particulier d'une bande de la peau poreuse de la figure 5.
La figure 7 est une vue en perspective d'une partie d'un panneau d'atténuation acoustique comportant une peau poreuse selon le mode de réalisation de la figure 1.

### Description détaillée

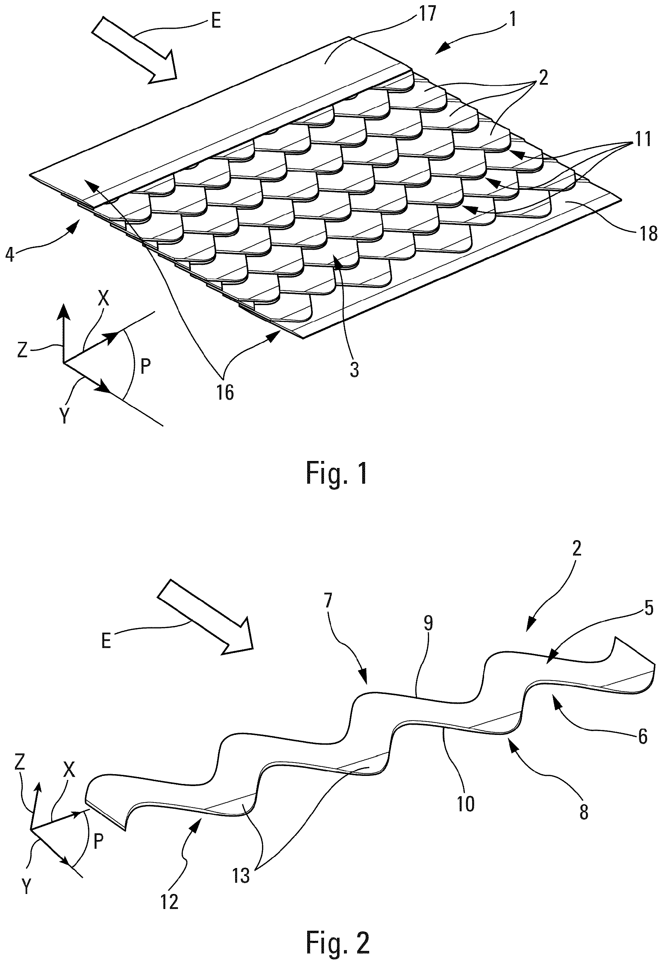

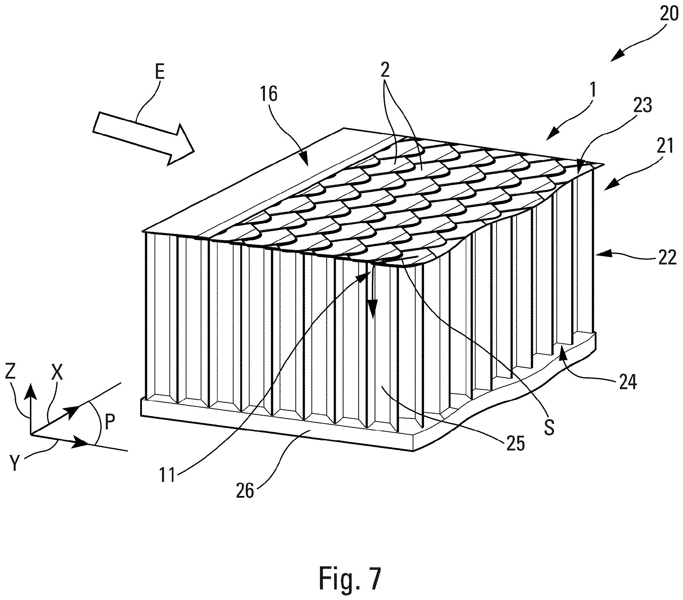

La peau poreuse 1, selon l'invention et dont une forme de réalisation est représentée schématiquement sur la figure 1, est une peau destinée à être agencée dans un panneau d'atténuation acoustique (figure 7).

Par « panneau d'atténuation acoustique », on entend un élément, de préférence en forme de plaque, destiné à être fixé sur une surface afin de réduire les bruits environnants, par exemple en emprisonnant et/ou en amortissant des ondes sonores (ou ondes acoustiques). Dans la présente description, on considère qu'un panneau d'atténuation acoustique peut correspondre à toute structure présentant des propriétés d'absorption acoustique. On considère également comme « extérieur » ou « externe » à un tel panneau, l'environnement d'où proviennent les ondes acoustiques à atténuer, et comme « intérieur » ou « interne », l'espace compris au sein dudit panneau dans lequel lesdites ondes acoustiques sont emprisonnées et/ou amorties.

La peau poreuse 1 est susceptible d'être soumise, sur une face externe, à un écoulement de fluide E, par exemple un écoulement d'air, comme illustré par une flèche sur les figures 1 à 7. La peau poreuse 1 est configurée pour être perméable à des ondes sonores tout en empêchant l'écoulement de fluide E de la traverser, comme décrit ci-après.

Pour ce faire, la peau poreuse 1 comporte, comme représenté sur la figure 1, une pluralité de bandes 2 qui, successivement, se chevauchent latéralement. Dans le cadre de la présente invention, on entend par « chevauchement » de deux bandes, le fait que l'une desdites bandes se superpose, en partie avec contact superficiel, à l'autre bande. De plus, le chevauchement « latéral » de deux bandes désigne l'agencement dans le sens de la largeur desdites bandes. Cet agencement sera décrit plus en détail dans la suite de la description.

De préférence, les bandes 2 sont réalisées en aluminium et présentent, par exemple, une épaisseur de l'ordre du centième de millimètre. Toutefois, elles peuvent également être réalisées dans d'autres matériaux, et notamment dans un matériau métallique autre que l'aluminium, dans un matériau plastique ou dans un matériau composite.

Comme représenté sur les figures 1 à 3 notamment, chacune des bandes 2 de la peau poreuse 1 présente une forme allongée s'étendant selon une direction X dite longitudinale, qui est sensiblement orthogonale à une direction Y dite latérale.

Dans les exemples des figures 1 à 7, les bandes 2 et la peau poreuse 1 sont agencées pour que la direction Y (direction latérale des bandes) corresponde à la direction de l'écoulement de fluide E. Dans d'autres modes de mise en oeuvre, les bandes 2 et la peau poreuse 1 peuvent être agencées de sorte que la direction Y latérale des bandes et la direction de l'écoulement de fluide E présentent entre elles un angle non nul, qui reste toutefois inférieur à 90 degrés.

Par ailleurs, la peau poreuse 1 présente une face 3 dite externe destinée à être soumise à l'écoulement de fluide E et une face 4 dite interne opposée à la face 3, comme représenté sur la figure 1. La direction X et la direction Y définissent un plan P dit horizontal qui est orthogonal à une direction Z dite verticale. En particulier, la direction Z est orientée vers le haut. La face 3 est orientée dans le sens de la direction Z et la face 4 est orientée dans le sens opposé à la direction Z.

De façon similaire, comme représenté sur la figure 2, chaque bande 2 présente une face 5 externe orientée dans le sens de la direction Z et une face 6 interne orientée dans le sens opposée à la direction Z. De préférence, les faces 5 et 6 sont parallèles entre elles. Toutefois, dans des modes de réalisation particuliers, elles peuvent être non parallèles.

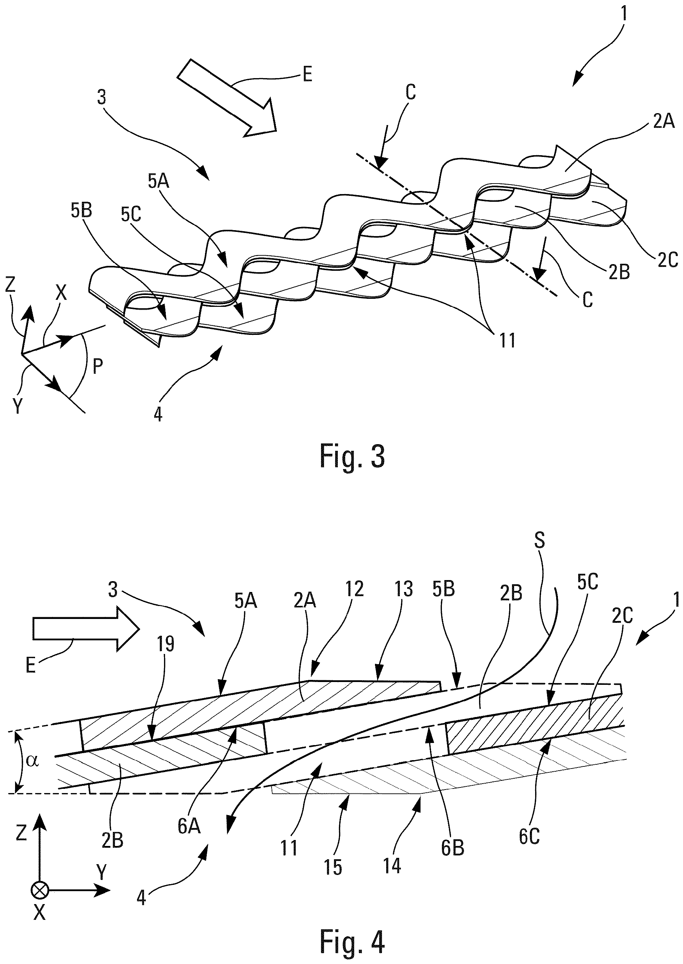

En outre, comme illustré sur la figure 4, les bandes 2 sont inclinées de sorte que leurs faces internes et externes présentent un angle α par rapport au plan P horizontal (donc sensiblement par rapport à l'écoulement de fluide E).

Les bandes 2 présentent également deux bords latéraux, à savoir les bords orientés selon la direction Y. Comme représenté sur la figure 2, chaque bande 2 est notamment pourvue d'un bord latéral 7 dit « amont » (situé en amont selon la direction Y, donc en amont dans le sens de de l'écoulement de fluide E) et d'un bord latéral 8 dit « aval » (situé en aval selon la direction Y, donc en aval dans le sens de l'écoulement de fluide E). Les bandes 2 se chevauchant latéralement, pour chacune d'elles, le bord latéral 7 n'est jamais en contact direct avec l'écoulement de fluide E tandis que le bord latéral 8 est en contact, au moins partiellement, avec ledit écoulement de fluide E. Le bord latéral 7 comprend un contour 9 et le bord latéral 8 comprend un contour 10. Chacun des contours 9 et 10 présente une ligne avec déviations.

Dans le cadre de la présente invention, une « ligne avec déviations » désigne une ligne non droite, c'est-à-dire une ligne pouvant comporter une ligne brisée (ou ligne polygonale), à savoir une succession de segments de droite avec des orientations différentes, et/ou une ou des lignes courbes. Un contour formant une ligne avec déviations est donc un contour qui est non complètement droit (ou non complètement rectiligne).

De plus, les bandes 2 sont agencées transversalement à l'écoulement de fluide E de sorte que chaque bande en amont dudit l'écoulement chevauche (c'est-à-dire recouvre en partie) la bande en aval. En particulier, l'agencement des bandes 2 et la forme des contours 9 et 10 des bords latéraux 7 et 8 sont configurés pour ménager des ouvertures 11 entre deux bandes 2 successives. En outre, les bandes 2 étant inclinées par rapport au plan P horizontal, lesdites ouvertures 11 ménagées entre deux bandes 2 sont recouvertes, au moins en partie, par une troisième bande 2 située en amont des deux premières. Les ouvertures 11 sont donc accessibles uniquement depuis l'aval de cette troisième bande.

De plus, les ouvertures 11 ainsi créées sont traversantes, ce qui permet à des ondes sonores de se déplacer au travers desdites ouvertures 11 afin de traverser la peau poreuse 1 en suivant un cheminement représenté schématiquement par une flèche S sur la figure 4.

Les ouvertures 11 permettent, toutefois, d'empêcher l'écoulement de fluide E de pénétrer dans les ouvertures 11, et donc de traverser la peau poreuse 1. En effet, l'inclinaison des bandes 2 et le recouvrement des ouvertures 11 par lesdites bandes 2, tel que décrit ci-dessus, ont pour effet de diriger l'écoulement de fluide E le long de la face 3 externe de la peau poreuse 1 par-dessus les bandes 2. L'écoulement de fluide E étant un déplacement de matière orienté sensiblement selon une direction donnée, il longe les faces 5 externes des bandes 2 sans possibilité d'accéder aux ouvertures 11. En revanche, les ondes sonores qui correspondent à des vibrations mécaniques, c'est-à-dire à des compressions et dilatations du milieu environnant, peuvent donc se propager (de proche en proche) dans toutes les directions et notamment au travers des ouvertures 11 accessibles depuis l'aval.

En outre, on peut modifier les dimensions (longueur et section) des ouvertures 11 en modifiant au moins l'un des paramètres suivants : la forme des contours des bords latéraux 7 et 8, l'agencement des bandes 2 les unes par rapport aux autres, et l'épaisseur des bandes 2.

Par ailleurs, le chevauchement des bandes 2 crée, entre deux bandes successives, des surfaces de contact 19 (figure 4). Les surfaces de contact 19 entre deux bandes successives, correspondent aux interfaces (avec contact) formées par des portions longitudinales de la face interne de la bande amont chevauchant des portions longitudinales de la face externe de la bande aval.

En outre, de préférence, les bandes 2 sont fixées entre elles au niveau d'au moins certaines de ces surfaces de contact 19. En particulier, elles sont fixées par collage ou par soudage ou tout autre moyen de type connu.

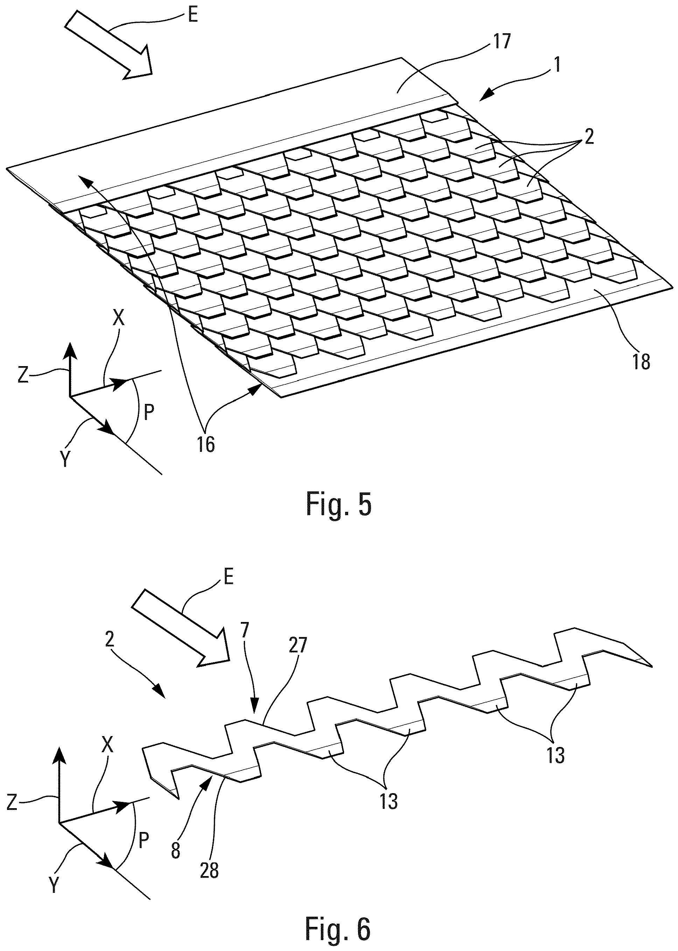

Dans un mode de réalisation préféré, comme représenté sur les figures 1 et 5, toutes les bandes 2 de la peau poreuse 1 sont identiques. Un tel mode de réalisation préféré, utilisant un seul type de bande, permet de simplifier la fabrication de la peau poreuse 1 et de réduire son coût de fabrication.

Toutefois, dans une variante de ce mode de réalisation préféré, au moins certaines des bandes 2 sont différentes entre elles, et présentent, par exemple, des longueurs différentes, des largeurs différentes et/ou des bords latéraux différents. Dans une réalisation particulière de cette variante, la peau poreuse 1 comporte une succession d'au moins deux bandes 2 différentes entre elles, ladite succession étant répétée latéralement (selon la direction Y) afin de former la pluralité de bandes 2 de la peau poreuse 1.

Dans le mode de réalisation représenté sur les figures 1 à 3 notamment, les deux contours 9 et 10 des bords latéraux 7 et 8 présentent chacun une ligne avec déviations. De préférence, comme représenté sur la figure 2, lesdits contours 9 et 10 sont identiques, c'est-à-dire qu'ils présentent la même forme et l'un desdits contours 9 et 10 peut être obtenu par une translation selon la direction Y de l'autre contour.

Dans une variante (non représentée) du mode de réalisation précédent, les formes des contours 9 et 10 sont décalées longitudinalement (selon la direction X) l'une par rapport à l'autre de sorte l'on puisse obtenir l'un des contours par une translation de l'autre contour selon une direction autre que la direction Y.

Dans une autre variante (non représentée) du mode de réalisation précédent, les contours des bords latéraux 7 et 8 présentent des formes différentes.

Par ailleurs, dans un premier mode de réalisation particulier, représenté sur les figures 1 à 4, les contours 9 et 10 des bords latéraux 7 et 8 présentent une forme curviligne (c'est-à-dire une ligne avec des courbes). Dans l'exemple représenté, la forme curviligne correspond à une forme sinusoïdale.

En outre, dans un deuxième mode de réalisation particulier, représenté sur les figures 5 et 6, les bords latéraux 7 et 8 comportent respectivement un contour 27 et un contour 28. Les contours 27 et 28 présentent tous les deux une forme comprenant une ligne brisée (ou ligne polygonale). Dans l'exemple représenté, la forme de la ligne brisée formant les contours 26 et 27 correspond à une suite de créneaux trapézoïdaux. Dans des variantes de ce mode de réalisation, on peut prévoir, par exemple, des créneaux carrés, rectangulaires ou triangulaires.

Dans un troisième mode de réalisation (non représenté), les contours des bords latéraux comprennent au moins une ligne curviligne et au moins une ligne brisée.

En modifiant la taille et la forme des bandes 2 et notamment en modifiant les formes des contours de leurs bords latéraux 7 et 8, il est possible de faire varier les propriétés acoustiques et/ou les propriétés aérodynamiques de la peau poreuse 1 et de les adapter à l'application envisagée.

Par ailleurs, dans un mode de réalisation particulier, les bandes 2 sont pourvues d'une discontinuité 12 (figure 2), précisée ci-dessous, sur leur face 5 externe au niveau de leur bord latéral 8 aval. La discontinuité 12 forme une surface plane 13 à l'extrémité libre du bord latéral 8 (figures 2 et 6). La surface plane 13 est légèrement inclinée par rapport à la face 5 externe. La surface plane 13 peut notamment présenter un angle avec la face 5 qui est de l'ordre de quelques degrés. La discontinuité 12 s'étend sur toute la longueur de la bande 2 parallèlement à la direction X. Comme le contour 10, 28 du bord latéral 8 n'est pas droit et la discontinuité 12 est située à l'extrémité libre du bord latéral 8, ladite discontinuité 12 forme une pluralité de surfaces planes 13. Chaque surface plane13 est située sur un sommet ou un créneau du contour 10, 28, comme illustré sur les figures 2 et 6. Les surfaces planes 13 de la bande 2 sont formées de manière à être coplanaires.

De préférence, les surfaces planes 13 sont formées de manière à être comprises dans un même plan qui est parallèle au plan P horizontal. Ce plan peut notamment correspondre au plan défini par la face 3 externe de la peau poreuse 1. Ainsi, les surfaces planes 13 permettent de minimiser les irrégularités présentes à la surface de la face 3 externe de la peau poreuse 1, et par conséquent de ne pas altérer les propriétés aérodynamiques de la peau poreuse 1, notamment en limitant la traînée.

Dans ce mode de réalisation particulier, la discontinuité 12 correspond à un chanfrein. Toutefois dans une variante de ce mode de réalisation, la discontinuité 12 peut également correspondre à un biseau.

Par ailleurs, dans un mode de réalisation particulier, représenté sur la figure 4, les bandes 2 comportent également, sur leur face 6 interne au niveau de l'extrémité libre de leur bord latéral 7 amont, une discontinuité 14 formant des surfaces planes 15. Les surfaces planes 15 sont légèrement inclinées par rapport à la face 6 interne. Les surfaces planes 15 peuvent notamment présenter un angle avec la face 6 qui est de l'ordre de quelques degrés. De préférence, les surfaces planes 13 et 15 sont parallèles entre elles. Par conséquent, les surfaces planes 15 sont sensiblement comprises dans un même plan qui est parallèle au plan P horizontal. Ce plan peut, notamment, correspondre au plan défini par la face 4 interne de la peau poreuse 1. Ainsi, les surfaces planes 15 permettent d'obtenir une face 4 sensiblement plane pouvant servir de surface de contact pour agencer la peau poreuse 1, par exemple sur une paroi ou une face d'un panneau d'atténuation acoustique.

Dans un mode de réalisation particulier, la peau poreuse 1 comporte également un support 16 configuré pour supporter structurellement la pluralité de bandes 2.

Dans une réalisation particulière, représentée sur les figures 1 et 5, le support 16 comprend une première plaque 17 agencée en amont de la peau poreuse 1. La plaque 17 chevauche la ou les bandes 2 situées le plus en amont de la peau poreuse 1. Le support 16 comprend également une seconde plaque 18 agencée en aval de la pluralité de bandes 2 et elle chevauche la ou les bandes 2 situées le plus en aval de la peau poreuse 1. Les bandes 2 liées aux plaques 17 et 18 peuvent être fixés à ces dernières, par exemple par collage ou par soudage ou autre.

Dans une variante de ce mode de réalisation particulier, le support 17 peut correspondre à toute structure apte à supporter structurellement au moins certaines et de préférence l'ensemble des bandes 2, telle que par exemple un cadre ou une grille.

A titre d'exemple, et pour mieux expliquer la configuration de la peau poreuse 1, un mode de réalisation particulier d'une partie de la peau poreuse 1 comprenant trois bandes successives est illustré sur les figures 3 et 4. Une quatrième bande est représentée en trait plus fin sur la figure 4 afin de bien préciser l'agencement des trois bandes successives décrites ci-dessous dans une peau poreuse 1 comprenant plus de trois bandes.

Dans ce mode de réalisation particulier, la peau poreuse 1 comporte une première bande 2A dite amont, une seconde bande 2B dite intermédiaire et une troisième bande 2C dite aval. Dans la suite de la description, pour bien mettre en évidence l'agencement des différents éléments, on a ajouté la lettre A, B ou C aux éléments appartenant, respectivement, aux bandes 2A, 2B ou 2C.

Dans ce mode de réalisation particulier, les bandes 2A, 2B et 2C présentent la même forme. Elles sont agencées parallèles entre elles et sensiblement perpendiculaires à l'écoulement de fluide E. De plus, comme représenté sur la figure 4 qui est une vue en coupe de la peau poreuse 1 de la figure 3 selon un plan de coupe C-C, les bandes 2A, 2B et 2C sont inclinées par rapport au plan P horizontal. Plus précisément, les faces 5A, 5B et 5C externes présentent un angle α par rapport au plan P. Ainsi, les faces 5A, 5B et 5C externes sont agencées de manière à être en contact, au moins en partie, de l'écoulement de fluide E. De préférence, l'angle α est de l'ordre de quelques degrés afin d'obtenir une face 3 externe de la peau poreuse 1 qui est aérodynamique.

En outre, la bande 2A est agencée de manière à chevaucher la bande 2B. En particulier, une partie de la face 6A interne de la bande 2A est en contact (surfacique) avec une partie de la face 5B externe de la bande 2B.

De façon similaire, la bande 2B est agencée de manière à chevaucher la bande 2C. En particulier, une partie de la face 6B interne de la bande 2B est en contact (surfacique) avec une partie de la face 5C externe de la bande 2C.

De même, la bande 2C est agencée de manière à chevaucher une autre bande adjacente située en aval (représentée en trait fin sur la figure 4).

L'agencement des bandes 2A, 2B et 2C, tel que décrit ci-dessus, ainsi que la forme des contours de leurs bords latéraux permettent de ménager les ouvertures 11 entre lesdites bandes 2A, 2B et 2C. En particulier, les contours des bords latéraux des bandes 2B et 2C permettent de ménager un passage traversant entre la face 3 externe et la face 4 interne de la peau poreuse 1. De plus, comme illustré sur la figure 4 dans le plan de coupe C-C, le bord latéral aval de la bande 2A permet de recouvrir ce passage traversant en surplombant la bande 2B. Le passage traversant ainsi recouvert par la bande 2A correspond à l'ouverture 11 et n'est plus accessible depuis l'amont de la peau poreuse 1 (c'est-à-dire qu'il n'est pas possible à l'écoulement de fluide E se déplaçant d'amont en aval de pénétrer dans l'ouverture 11). Toutefois, la bande 2A n'est pas en contact avec la bande 2C. L'ouverture 11 reste donc accessible depuis l'aval, c'est-à-dire qu'il est possible de pénétrer dans ladite ouverture 11 et traverser la peau poreuse 1 en se déplaçant d'aval en amont, comme illustré pour des ondes sonores par la flèche S.

Dans une application préférée, la peau poreuse 1, telle que décrite ci-dessus, est destinée à être agencée dans un panneau d'atténuation acoustique 20, comme représenté sur la figure 7.

Le panneau d'atténuation acoustique 20 comporte une structure acoustique 21 pourvue, sur l'une de ces faces, de la peau poreuse 1. Dans le cadre de la présente invention, une « structure acoustique » désigne tout élément présentant des propriétés d'absorption acoustique, à savoir apte à emprisonner, amortir et/ou annuler des ondes sonores. En particulier, il peut s'agir d'une structure à base de mousse ou de matériau fibreux.

Dans le mode de réalisation préféré, représenté sur la figure 7, la structure acoustique 21 du panneau d'atténuation acoustique 20 comporte une structure alvéolaire 22 présentant une face supérieure 23 et une face inférieure 24 opposée à la face supérieure 23. La structure alvéolaire 22 comprend, entre la face supérieure 23 et la face inférieure 24, des alvéoles 25.

Dans une réalisation préférée de ce mode de réalisation, la structure alvéolaire 22 correspond à une structure en nid d'abeille (ou NIDA). Toutefois, dans des modes de réalisation particuliers, il peut également s'agir d'autres structures alvéolaires présentant des formes et des agencements d'alvéoles variés.

La structure acoustique 21 comporte également une peau arrière 26 dite réflective agencée sur la face inférieure 24 de la structure alvéolaire 22. De préférence, le panneau d'atténuation acoustique 20 est destiné à être agencé, par exemple sur une paroi, en fixant la peau arrière 26 sur ladite paroi.

La structure acoustique 21 comporte également la peau poreuse 1 qui est agencée sur la face supérieure 23 de la structure alvéolaire 22. La face 4 interne de la peau poreuse 1 est fixée sur la face supérieure 23 de la structure alvéolaire 22, par exemple par collage ou soudage. La peau poreuse 1 peut notamment être fixée sur le panneau d'atténuation acoustique 20 par l'intermédiaire du support 16 (figures 1 et 5). En outre, la peau poreuse 1 est agencée de sorte que les ouvertures 11 soient en regard des alvéoles 25. Ainsi, l'espace compris à l'intérieur des alvéoles 25 est accessible depuis l'extérieur du panneau d'atténuation acoustique 20. Les ondes sonores peuvent donc pénétrer dans les alvéoles 25, comme représenté par la flèche S sur la figure 7, tandis que l'écoulement de fluide E n'est pas en mesure de traverser la peau poreuse 1.

En modifiant la taille et la forme des bandes 2 et notamment en modifiant les formes des contours des bords latéraux 7 et 8, il est possible d'adapter la position des ouvertures 11 de la peau poreuse 1 à des architectures variées de la structure alvéolaire 22. Ainsi, il est notamment possible d'optimiser la compatibilité de la peau poreuse 1 à la structure alvéolaire 22.

Un tel panneau d'atténuation acoustique 20 est particulièrement adapté à l'atténuation des bruits générés par un aéronef, par exemple un avion de transport et en particulier par un ensemble propulsif (ou réacteur) de l'aéronef.

Le panneau d'atténuation acoustique 20 est destiné à être fixé sur une paroi (non représentée), par exemple une paroi d'entrée d'air d'une nacelle d'un ensemble propulsif. A cet effet, le panneau d'atténuation acoustique 20 correspond, de préférence, à une plaque plane, comme dans l'exemple illustré sur la figure 7. Toutefois, dans des modes de réalisation particuliers, le panneau d'atténuation acoustique 20 peut présenter des formes variées afin d'épouser la forme de la paroi sur laquelle il est destiné à être agencé.

La peau poreuse 1, telle que décrite ci-dessus, qui est appliquée à un panneau d'atténuation acoustique 20, présente de nombreux avantages. En particulier :
- elle permet d'obtenir un panneau d'atténuation acoustique 20 dont les propriétés d'atténuation acoustique sont très faiblement impactées par un écoulement de fluide E à la surface dudit panneau d'atténuation acoustique 20, la peau poreuse 1 laissant en effet pénétrer les ondes sonores à l'intérieur du panneau d'atténuation acoustique 20 tout en empêchant l'écoulement de fluide E de la traverser ;
- elle permet de limiter les irrégularités à la surface externe du panneau d'atténuation acoustique 20 et donc d'obtenir de bonnes propriétés aérodynamiques en limitant la traînée, grâce à l'agencement particulier des bandes 2 et aux surfaces planes 13 formant la face 3 externe de la peau poreuse 1 ;
- elle permet de modifier les propriétés acoustiques et/ou aérodynamiques de la surface externe du panneau d'atténuation acoustique 20 en adaptant la taille et la forme des bandes 2 ; et
- elle permet d'obtenir une surface externe du panneau d'atténuation acoustique 20 dont les positions des ouvertures 11 peuvent être adaptées à des architectures variées de la structure acoustique 21 et notamment de la structure alvéolaire 22, en particulier en adaptant la taille et la forme des bandes 2.

## Revendications

1. Peau poreuse pour un panneau d'atténuation acoustique, ladite peau poreuse (1) étant destinée à être soumise à un écoulement de fluide (E),
**caractérisée en ce qu'**elle comporte une pluralité de bandes (2) qui sont agencées transversalement à l'écoulement de fluide (E) et qui, successivement, se chevauchent latéralement, chaque bande (2) en amont de l'écoulement de fluide (E) chevauchant la ou les bandes (2) en aval dudit écoulement de fluide (E), **en ce que** chacune desdites bandes (2) comporte un premier bord latéral (7) dit amont et un second bord latéral (8) dit aval, au moins l'un desdits bords latéraux (7, 8) comprenant un contour formant une ligne avec déviations, et **en ce que** l'agencement des bandes (2) et le ou les contours de leurs bords latéraux (7, 8) sont configurés pour ménager, entre les bandes (2), des ouvertures (11) communicant depuis une face externe de la peau poreuse (1) jusqu'à une face interne de ladite peau poreuse (1), et pour empêcher l'écoulement de fluide (E) de pénétrer dans lesdites ouvertures (11).

2. Peau poreuse selon la revendication 1,
**caractérisée en ce qu'**au moins certaines desdites ouvertures (11) sont créées par des formes adaptées d'une part du contour du bord latéral (8) aval d'une première bande (2B) et d'autre part du contour du bord latéral (7) amont d'une seconde bande (2C) directement en aval de ladite première bande (2B), chacune des ouvertures (11) ainsi créées étant recouverte par une troisième bande (2A) qui est directement en amont de ladite première bande (2B) et qui surplombe cette première bande (2B) vers l'aval.

3. Peau poreuse selon l'une quelconque des revendications 1 et 2,
**caractérisée en ce que** le chevauchement des bandes (2) crée entre deux bandes (2) successives, des surfaces de contact (19), et **en ce que** les bandes (2) sont fixées entre elles au niveau d'au moins certaines desdites surfaces de contact (19).

4. Peau poreuse selon l'une quelconque des revendications précédentes, **caractérisée en ce que** le contour d'au moins l'un des bords latéraux (7, 8) comprend, au moins partiellement, une ligne curviligne.

5. Peau poreuse selon l'une quelconque des revendications précédentes, **caractérisée en ce que** le contour d'au moins l'un des bords latéraux (7, 8) comprend, au moins partiellement, une ligne brisée.

6. Peau poreuse selon l'une quelconque des revendications 1 à 5,
**caractérisée en ce que** lesdites bandes (2) sont de forme identique.

7. Peau poreuse selon l'une quelconque des revendications 1 à 5,
**caractérisée en ce qu'**au moins certaines desdites bandes (2) sont de forme différente entre elles.

8. Peau poreuse selon l'une quelconque des revendications précédentes, **caractérisée en ce que** lesdites bandes (2) présentent, à au moins l'un de leurs bords latéraux (7, 8) sur l'une de leurs faces (5, 6), une discontinuité (12, 14) formant au moins une surface plane (13, 15).

9. Panneau d'atténuation acoustique comprenant au moins une structure acoustique pourvue d'une peau poreuse,
**caractérisé en ce que** ladite peau poreuse de la structure acoustique (21) correspond à la peau poreuse (1) selon l'une quelconque des revendications 1 à 8.

10. Panneau d'atténuation acoustique selon la revendication 9,
**caractérisé en ce que** la structure acoustique (21) comprend au moins une structure alvéolaire (22) pourvue, sur l'une (24) de ses faces, d'une peau arrière (26) dite réflective et, sur l'autre face (23), de la peau poreuse (1).

## Patentansprüche

1. Poröse Haut für eine Schalldämmplatte, wobei die poröse Haut (1) dazu bestimmt ist, einer Fluidströmung (E) ausgesetzt zu werden, **dadurch gekennzeichnet, dass** sie eine Vielzahl von Bändern (2) umfasst, die zur Fluidströmung (E) querverlaufend angeordnet sind, und die sich aufeinander folgend seitlich überlappen, wobei jedes der Fluidströmung (E) vorgelagerte Band (2) das oder die der Fluidströmung (E) nachgelagerten Bänder überlappt, dadurch, dass jedes der Bänder (2) einen ersten sogenannten vorgelagerten seitlichen Rand (7) und einen zweiten sogenannten nachgelagerten seitlichen Rand (8) umfasst, wobei mindestens einer der seitlichen Ränder (7, 8) eine Kontur umfasst, die eine Linie mit Krümmungen bildet, und dadurch, dass die Anordnung der Bänder (2) und der oder den Konturen ihrer seitlichen Ränder (7, 8) konfiguriert sind, um zwischen den Bändern (2) Öffnungen (11) anzubringen, die von einer externen Fläche der porösen Haut (1) bis zu einer internen Fläche der porösen Haut (1) miteinander verbunden sind, und zum Verhindern, dass die Fluidströmung (E) in die Öffnungen (11) eindringt.

2. Poröse Haut nach Anspruch 1,
**dadurch gekennzeichnet, dass** mindestens einige der Öffnungen (11) durch Formen erzeugt werden, die einerseits der Kontur des nachgelagerten seitlichen Rands (8) eines ersten Bands (2B) und andererseits der Kontur des vorgelagerten seitlichen Rands (7) eines zweiten Bands (2C), dem ersten Band (2B) direkt nachgelagert, angepasst sind, wobei jede der somit erzeugten Öffnungen (11) von einem dritten Band (2A) bedeckt ist, das dem ersten Band (2B) direkt vorgelagert ist und das dieses erste Band (2B) stromabwärts überragt.

3. Poröse Haut nach einem der Ansprüche 1 und 2, **dadurch gekennzeichnet, dass** die Überlappung der Bänder (2) zwischen zwei aufeinander folgenden Bändern (2) Kontaktoberflächen (19) erzeugt, und dadurch, dass die Bänder (2) untereinander auf Höhe mindestens einiger der Kontaktoberflächen (19) befestigt sind.

4. Poröse Haut nach einem der vorstehenden Ansprüche, **dadurch gekennzeichnet, dass** die Kontur von mindestens einem der seitlichen Ränder (7, 8) mindestens teilweise eine krummlinige Linie umfasst.

5. Poröse Haut nach einem der vorstehenden Ansprüche, **dadurch gekennzeichnet, dass** die Kontur von mindestens einem der seitlichen Ränder (7, 8) mindestens teilweise eine unterbrochene Linie umfasst.

6. Poröse Haut nach einem der Ansprüche 1 bis 5, **dadurch gekennzeichnet, dass** die Bänder (2) von identischer Form sind.

7. Poröse Haut nach einem der Ansprüche 1 bis 5, **dadurch gekennzeichnet, dass** mindestens einige der Bänder (2) untereinander von unterschiedlicher Form sind.

8. Poröse Haut nach einem der vorstehenden Ansprüche, **dadurch gekennzeichnet, dass** die Bänder (2) an mindestens einem ihrer seitlichen Ränder (7, 8) auf einer ihrer Flächen (5, 6) eine Diskontinuität (12, 14) aufweisen, die mindestens eine ebene Oberfläche (13, 15) bildet.

9. Schalldämmplatte, umfassend mindestens eine akustische Struktur, die mit einer porösen Haut versehen ist, **dadurch gekennzeichnet, dass** die poröse Haut der akustischen Struktur (21) der porösen Haut (1) nach einem der Ansprüche 1 bis 8 entspricht.

10. Schalldämmplatte nach Anspruch 9, **dadurch gekennzeichnet, dass** die akustische Struktur (21) mindestens eine Wabenstruktur (22) umfasst, die auf einer (24) ihrer Flächen mit einer sogenannten reflektierenden hinteren Haut (26) und auf der anderen Fläche (23) mit der porösen Haut (1) versehen ist.

## Claims

1. A porous skin for an acoustic attenuation panel, said porous skin (1) being intended to be subjected to a fluid flow (E),
**characterized in that** it includes a plurality of strips (2) that are arranged transversely to the fluid flow (E) and which successively overlap each other laterally, each strip (2) upstream of the fluid flow (E) overlapping the strip or strips (2) downstream of said fluid flow (E), **in that** each of said strips (2) includes a first so-called upstream lateral edge (7) and a second so-called downstream lateral edge (8), at least one of said lateral edges (7, 8) comprising a contour defining a line with deviations, and **in that** the arrangement of the strips (2) and the contour or contours of their lateral edges (7, 8) are configured to form between the strips (2) openings (11) connecting an external face of the porous skin (1) to an internal face of said porous skin (1) and to prevent the fluid flow (E) from penetrating into said openings (11).

2. The porous skin as claimed in claim 1,
**characterized in that** some of said openings (11) are created by shapes adapted to match on the one hand the contour of the downstream lateral edge (8) of a first strip (2B) and on the other hand the contour of the upstream lateral edge (7) of a second strip (2C) directly downstream of said first strip (2B), each of the openings (11) created in this way being covered by a third strip (2A) that is directly upstream of said first strip (2B) and that overlies this first strip (2B) in the downstream direction.

3. The porous skin as claimed in either one of claims 1 or 2,
**characterized in that** the overlapping of the strips (2) creates contact surfaces (19) between two successive strips (2) and **in that** the strips (2) are fixed together at the level of at least some of said contact surfaces (19).

4. The porous skin as claimed in any one of the preceding claims, **characterized in that** at least part of the contour of at least one of the lateral edges (7, 8) comprises a curved line.

5. The porous skin as claimed in any one of the preceding claims, **characterized in that** at least part of the contour of at least one of the lateral edges (7, 8) comprises a broken line.

6. The porous skin as claimed in any one of claims 1 to 5,
**characterized in that** said strips (2) are of identical shape to one another.

7. The porous skin as claimed in any one of claims 1 to 5,
**characterized in** at least some of said strips (2) are of different shapes to one another.

8. The porous skin as claimed in any one of the preceding claims, **characterized in that** said strips (2) have on at least one of their lateral edges (7, 8) on one of their faces (5, 6) a discontinuity (12, 14) forming at least one plane surface (13, 15).

9. An acoustic attenuation panel comprising at least one acoustic structure provided with a porous skin,
**characterized in that** said porous skin of the acoustic structure (21) is a porous skin (1) as claimed in any one of claims 1 to 8.

10. The acoustic attenuation panel as claimed in claim 9,
**characterized in that** the acoustic structure (21) comprises at least one cellular structure (22) provided on one face (24) with a so-called reflective rear skin (26) and on the other face (23) with the porous skin (1).
